# EUROPEAN PATENT SPECIFICATION

(11) **EP 3 671 386 B1**
(45) Date of publication and mention of the grant of the patent: **30.07.2025**
(21) Application number: 18215264.5
(22) Date of filing: 21.12.2018
(51) Int. Cl.: H04W 24/04, H04B 7/185

(54) **RADIO SYSTEM AND METHOD OF OPERATING A RADIO SYSTEM**
FUNKSYSTEM UND VERFAHREN ZUM BETREIBEN EINES FUNKSYSTEMS
SYSTÈME RADIO ET PROCÉDÉ DE FONCTIONNEMENT D'UN SYSTÈME RADIO

(43) Date of publication of application: 24.06.2020
(73) Proprietor: Rohde & Schwarz GmbH & Co. KG, 81671 München (DE)
(72) Inventor: Gualtieri, Francesco, 81671 München (DE)
(74) Representative: Novagraaf Group

(56) References cited:
- WO-A2-2004/102294
- US-A1- 2017 052 532
- ROHDE & SCHWARZ GMBH & CO. KG: "R&S Series4200 Software Defined Radios VHF/UHF radio family for ATC communications", 1 July 2013 (2013-07-01), XP055366613, Retrieved from the Internet <URL:https://cdn.rohde-schwarz.com/pws/dl_downloads/dl_common_library/dl_brochures_and_datasheets/pdf_1/Series4200_bro_en_5213-5700-12_v0700.pdf> [retrieved on 20170424]
- ANONYMOUS: "R&S S4200 XU 4200 VHF Transceiver Operating Manual", 1 January 2012 (2012-01-01), XP093030622, Retrieved from the Internet <URL:https://www.manualslib.com/download/1862206/RAnds-4200-Series.html> [retrieved on 20230310]

## Description

The invention relates to a radio system. Further, the invention relates to a method of operating a radio system.

Radio systems are inter alia used for air traffic control (ATC). In fact, the radio system is used by supervisory authorities, airports, air navigation service providers or rather airlines to communicate with a flying object, namely an airplane. For instance, voice over internet protocol (VoIP) technology is used by the radio systems known in the state of the art so that migration without additional hardware is possible. Accordingly, new functions of the radio systems can be implemented easily.

Such a radio system typically comprises several radio devices that are arranged in a common rack of the radio system. The different radio devices may be connected with each other, for instance via the rack, wherein the radio devices may interact with each other in order to provide the respective functionalities of the radio system. However, the radio system as well as the individual radio devices of the common radio system have to be maintained periodically, for instance by performing maintenance measurements. This means that a certain radio device has to be identified and disconnected from the other radio devices, namely the rack, so that an operator is enabled to perform maintenance measurements of the respective radio device. Therefore, the operator firstly sets the respective radio device in a maintenance mode in which the radio device can be maintained.

Typically, up to about 40 different radio devices are installed in a single rack so that it is difficult and time consuming to identify the respective radio device that shall be maintained. Moreover, the respective configuration parameters have to be loaded manually to ensure that the respective radio device can be maintained. After the maintenance, the respective configuration parameters for regular operation of the radio device have to be set manually again to ensure that the radio device is enabled to interact with the other radio devices of the radio system. The manual loading of the respective settings is error-prone and time consuming.

WO 2004/102294 A2 shows an operational control system and a system for remote monitoring of a manufacturing device, for instance a foam dispenser device such as a foam-in-bag dispensing device.

In US 2017/0052532 A1 a system for controlling, monitoring and regulating processes in industrial plants that has a closed feedback loop with an automatically configurable parameter generated by the industrial plant on a customer side.

R&S Series4200 Software Defined Radios VHF/UHF radio family for ATC communications and R&S S4200 XU 4200 VHF Transceiver Operating Manual describe a radio system with redundant radios that can be configured remotely by using a service PC that interacts with the radio via an IP connection.

Accordingly, there is a need for a fast and safe possibility to maintain a radio device of a radio system.

The invention provides a radio system with an own configuration unit and a memory, wherein the radio system has a regular operation mode and a maintenance mode. The radio system is an air traffic control radio system for air traffic control communication. In the regular operation mode, the radio system is configured to establish a radio connection between a ground station and a flying object. In the maintenance mode, the radio system is configured to establish a maintenance connection. Settings assigned to both the regular operation mode and the maintenance mode are stored in the memory. The own configuration unit is configured to set the radio system with respective settings stored in the memory depending on the mode activated.

Moreover, the invention provides a method of operating a radio system with an own configuration unit, with the following steps:
- Providing a radio system that is an air traffic control radio system for air traffic control communication, wherein the radio system has a regular operation mode and a maintenance mode, wherein, in the regular operation mode, a radio connection is established between a ground station and a flying object,
- Loading and applying, by the own configuration unit, in the regular operation mode, maintenance settings assigned to the maintenance mode in case of activation of the maintenance mode, and
- Loading and applying, by the own configuration unit, regular operation settings when the maintenance mode is quit.

Accordingly, a radio system as well as a method of operating the same are provided that ensure to maintain the respective radio system in a fast and easy manner by loading the respective settings so that at least one radio device of the radio system is set in the maintenance mode automatically. Therefore, respective maintenance settings assigned to the maintenance mode are loaded and applied to the radio system, in particular the respective radio device, so that at least the respective radio device can be maintained without any manual input with regard to the settings.

In other words, the radio system comprises at least two different sets of configuration parameters, also called settings, which are used for at least one radio device. Depending on the mode activated, the respective settings or rather configuration parameters are loaded and applied to the at least one radio device to be maintained.

Hence, maintenance settings or rather configuration parameters assigned to the maintenance mode are loaded and applied if the maintenance mode is activated. In fact, the maintenance mode is activated when the radio system is in its regular operation mode.

Once the maintenance has been finished and the maintenance mode is quit, the regular operation settings or rather the configuration parameters related to the regular operation mode are loaded and applied so that the whole radio system can be used in regular operation.

The two different sets of configurations or the two different sets of configuration parameters ensure that it is not necessary to adapt manually the settings of the radio system for regular operation or rather maintenance. Thus, the error-proneness of the radio system is minimized as no manual change of the settings or rather configurations is required. In fact, the respective settings or rather configuration parameters are automatically loaded an applied once the respective mode is activated.

Generally, the radio system may comprise at least one radio device, in particular several radio devices. The at least one radio device may be the component of the radio system, which is to be maintained. Accordingly, the respective settings may correspond to the at least one radio device to be maintained. Put it another way, the at least one radio device may have a regular operation mode and a maintenance mode.

However, the whole radio system may be set in the respective mode, particularly the maintenance mode, even though only one of the several radio devices is to be maintained.

In fact, the two different sets ensure a safe and reliable change of the settings applied between both modes, namely the regular operation mode and the maintenance mode.

The radio system may be used by supervisory authorities, airports, air navigation service providers or rather airlines to communicate with a flying object, namely an airplane.

According to an aspect, the settings assigned to both the regular operation mode and the maintenance mode are predefined, in particular during the initial set up of the radio system. Therefore, the different settings or rather configuration parameters, namely the respective sets, are initially stored in the memory of the radio system during the first set up of the radio system, in particular the initial setup of the respective radio device(s) of the radio system.

According to another aspect, the radio system is configured to switch between the regular operation mode and the maintenance mode based on an operator input. Thus, the operator interacts with the radio system to activate the respective mode, in particular the maintenance mode. Therefore, the operator decides whether or not the radio system, in particular the respective radio device of the radio system, will be maintained or not since the operator activates the respective mode.

Once the maintenance mode is activated and the respective settings are loaded and applied to the radio system, the radio device to be maintained may be disconnected from the rack in order to be maintained, for instance to perform the respective maintenance measurements.

Alternatively, the radio system may be set in the maintenance mode automatically based on a certain event indicating the start of the maintenance mode.

For instance, the radio system has an operator interface at its front side. Thus, the operator can easily reach the respective operator interface for activating the maintenance mode of the radio system. For instance, the radio device of the radio system is prepared for maintenance purposes on the front side of the rack.

Moreover, a radio device to be maintained may be connected with the rack, in particular at the rear side of the rack, once the radio system is set in the maintenance mode. Particularly, the whole radio system is set in the maintenance mode at the front side of the rack where the operator interface is located.

Another aspect provides that an indicator is assigned to a rear side of the radio system, in particular wherein the indicator is controlled in the maintenance mode to identify a radio device to be maintained. Therefore, the operator can easily identify the respective radio device at the rear side of the rack comprising several radio devices. Hence, the operator is enabled to select one of the several radio devices that is to be disconnected from the rack for maintenance.

Typically, the radio device is disconnected on the rear side of the so that the indicator is located at the side where the radio device is to be disconnected. Therefore, the operator can directly gather the information which of the several radio devices is to be disconnected and disconnect the respective radio device appropriately.

In fact, the maintenance mode is activated on the front side of the rack wherein the respective radio device is indicated on the rear side to avoid any failure when the respective radio device is disconnected from the rack for maintenance purposes.

Furthermore, the indicator is an optical indicator that is configured to indicate the maintenance mode visually, in particular wherein the indicator is established by a diode and/or a network port. Thus, the operator gets the respective information with regard to the radio device to be disconnected and maintained in a visual manner.

The radio system may have an antenna for establishing the radio connection in the regular operation mode. Thus, the radio system may be used for wireless communication with the object via its antenna.

Generally, the radio system may use voice over internet protocol (VoIP) technologies, in particular for maintenance purposes.

According to an aspect, the maintenance mode is activated or quit based on operator input. Thus, the operator actively interacts with the radio system, in particular the whole radio system comprising several devices, to activate a certain mode or rather to quit a certain mode.

Furthermore, the operator may interact with an operator interface at the front side of the radio system to activate the maintenance mode. Thus, the activation can be done at a side that can be reached easily by the operator.

Another aspect provides that a radio device to be maintained is indicated on the rear side of the radio system in a visual manner. For instance, a diode and/or a network port on the rear side may be controlled to output a light, for instance a blinking light. Thus, the operator can easily detect the respective radio device.

Another aspect provides that, in the maintenance mode, a maintenance connection is established with a maintenance device and/or to an operator, in particular voice internet protocol techniques. Hence, the radio system, in particular a specific radio device of the radio system, may be controlled by a user via the maintenance device or rather by the operator using voice over internet protocol techniques so that the radio system can be maintained. The maintenance device may be a computer such as a notebook or a laptop that establishes the maintenance connection with the radio system, in particular the respective radio device to be maintained.

Furthermore, radio frequency communication and/or audio communication are/is simulated and/or a test device is used in the maintenance mode so that the radio system or rather the radio device can be maintained. The radio frequency communication and/or audio communication may correspond maintenance tests. The test device may be an internal one or an external one that is connected with the radio system, in particular the respective radio device to be maintained. For instance, the test device is used for performing the maintenance measurements.

Generally, the configuration unit and the memory may be assigned to the whole radio system or the specific radio device of the radio system. In other words, each of the radio devices of the radio system may comprise its own configuration unit and memory. Hence, the respective configuration unit of the radio device to be maintained loads and applies the respective settings for the radio device.

Alternatively, a common configuration unit and a common memory are provided that comprise the respective settings for each of the radio devices of the radio system.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a radio system according to the invention, and
- Figure 2 shows a flow-chart illustrating a method of operating a radio system according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

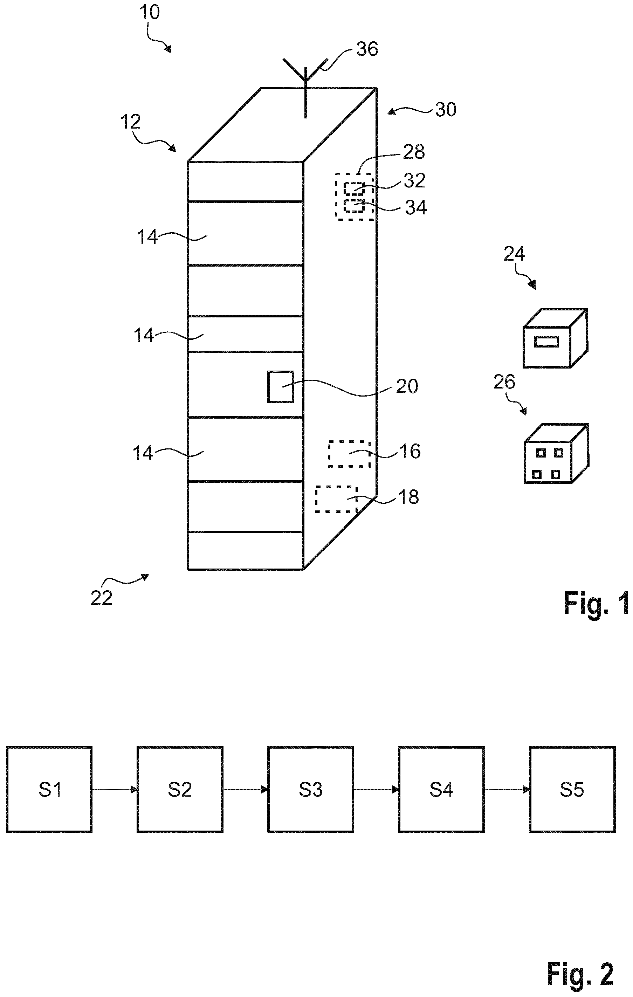

In Figure 1, a radio system 10 is shown that comprises a rack 12 as well as several radio devices 14 that are installed in the rack 12.

The radio system 10 has a configuration unit 16 as well as a memory 18 that are electrically connected with each other so that the configuration unit 16 is enabled to access the memory 18 for loading data from the memory 18 to be applied.

In the memory 18, at least two sets of configuration parameters or rather settings are stored that are assigned to a regular operation mode of the radio system 10 as well as a maintenance mode of the radio system 10. Particularly, the configuration parameters or settings are assigned to the respective modes of the at least one radio device 14.

The respective settings or the configuration parameters are predefined and stored in the memory 18 during the initial setup of the radio system 10.

Further, the radio system 10 has an operator interface 20 at its front side 22 so that an operator of the radio system 10 is enabled to activate the maintenance mode of the radio system 10 by interacting with the operator interface 20 at the easily accessible front side 22 of the rack 12.

The radio system 10 based on the operator input switches between the regular operation mode and the maintenance mode. Hence, the radio system 10, in particular at least one of the several radio devices 14, is switched into its maintenance mode provided that the operator of the radio system 10 has manually activated the maintenance mode.

Therefore, the maintenance settings assigned to the maintenance mode are loaded from memory 18 by the configuration unit 16 and applied to the at least one radio device 14 appropriately. Thus, the respective configuration parameters or rather settings are adapted in an automatic manner so that it is not required that the operator or the user has to define or rather adjust the settings manually. In fact, the user or the operator only has to activate the maintenance mode.

In the maintenance mode, a maintenance connection may be established with a separately formed maintenance device 24 or rather a test device 26 with which maintenance measurements may be performed. Generally, the maintenance connection may be established with an (external) operator via voice over internet protocol (VoIP) techniques.

For instance, radio frequency communication and/or audio communication are/is simulated in the maintenance mode.

Further, the radio system 10 has at least one indicator 28 that is assigned to a rear side 30 of the radio system 10, namely the rack 12. The indicator 28 is controlled, for instance via the configuration unit 16, to identify the specific radio device 14 to be maintained. The indicator 28 simplifies the identification of the specific radio device 14.

According to an embodiment, the indicator 28 is established by a diode 32 and/or a network port 34 that may comprise a diode.

In other words, the indicator 28 is an optical indicator that is configured to indicate the maintenance mode visually by identifying the respective radio device 14 at the rear side 30 of the rack 12 so that the operator is enabled to identify the radio device 14 to be maintained within the rack 12 in a fast and simple manner.

Thus, the operator is enabled to disconnect the radio device 14 from the rack 12 for maintenance purposes.

Once the radio device 14 is disconnected from the rack 12, the respective radio device 14 can be connected with the maintenance device 24 or the test device 26 for performing the maintenance. Previously, the radio device 14 has been set in the maintenance mode by loading and applying the respective settings.

In the regular operation mode, the radio system 10 is generally configured to establish a wireless or rather radio connection to an object such as a flying object. Hence, the radio system 10 may correspond to an air traffic control radio system that is generally configured to establish a radio connection between a ground station and a flying object such as a plane.

For this purpose, the radio system 10 has an antenna 36 via which the radio or rather wireless connection is established.

Accordingly, the radio system 10 is configured to establish a radio connection to an object in the regular operation mode, whereas the radio system 10 is configured to establish a maintenance connection in the maintenance mode.

In Figure 2, a method of operating the radio system 10 is shown.

In a first step S1, the radio system 10 is provided that has a regular operation mode as well as a maintenance mode between which the radio system 10 can be switched, in particular based on a manual operator input.

Once the operator has activated the maintenance mode, for instance by interacting with the operator interface 20 at the front side 22 of the radio system 10, maintenance settings or configuration parameters assigned to the maintenance mode are loaded from the memory 18 and applied in a second step S2.

Typically, the maintenance mode is activated in the regular operation mode since the radio system 10 is running in the regular operation mode.

In a third step S3, the radio device 14 to be maintained is visually indicated on the rear side 30 of the radio system 10 so that the operator can easily identify the respective radio device 14 to be maintained. Hence, the radio device 14 can be identified easily and disconnected from the rack 12 for maintenance purposes.

In a fourth step S4, the radio system 10, in particular the radio device 14, is maintained. For instance, the radio device 14 is connected with the maintenance device 24 or the test device 26 with which maintenance measurements are performed.

Generally, the maintenance connection may be established with an (external) operator via voice over internet protocol (VoIP) techniques.

In a fifth step S5, regular operation settings or rather configuration parameters assigned to the regular operation mode are loaded from the memory 18 and applied when the maintenance mode is quit.

The maintenance mode may be quit based up on activation by the operator or rather automatically when the radio device 14 to be maintained is re-connected with the rack 12 after the radio system 10, namely the specific radio device 14, has been maintained.

Alternatively, the maintenance mode of the radio system 10 is quit when the specific radio device 14 is disconnected from the rack 12 in case that the radio system 10 still provides a certain functionality that can be used in the regular operation mode.

Since the maintenance mode can be activated at the front side 22 of the whole radio system 10, namely at the rack 12, a centralized maintenance is possible.

Accordingly, the whole rack 12 may be set in the maintenance mode. Alternatively, a single radio device 14 or rather a group of radio devices 14 may be set in the maintenance mode via the operator interface 20.

In general, the radio system 10 is set in the maintenance mode by the operator in a manual manner while operating the radio system 10 via the operator interface 20. Depending on the selected radio device(s) 14 to be maintained, the respective radio device(s) 14 may be indicated by the at least one indicator 28 assigned to the rear side 30 of the radio system 10, in particular the rack 12.

## Claims

1. A radio system (10) with an own configuration unit (16), wherein the radio system (10) is an air traffic control radio system (10) for air traffic control communication, wherein the radio system (10) has a regular operation mode and a maintenance mode, wherein, in the regular operation mode, the radio system (10) is configured to establish a radio connection between a ground station and a flying object, wherein, in the maintenance mode, the radio system (10) is configured to establish a maintenance connection, **characterized in that** the radio system (10) has a memory (18), wherein settings assigned to both the regular operation mode and the maintenance mode are stored in the memory (18), and wherein the own configuration unit (16) is configured to set the radio system (10) with the respective settings stored in the memory (18) depending on the mode activated.

2. The radio system (10) according to claim 1, wherein the settings assigned to both the regular operation mode and the maintenance mode are predefined, in particular during the initial setup of the radio system (10).

3. The radio system (10) according to claim 1 or 2, wherein the radio system (10) is configured to switch between the regular operation mode and the maintenance mode based on an operator input.

4. The radio system (10) according to any of the preceding claims, wherein the radio system (10) has an operator interface (20) at its front side (22).

5. The radio system (10) according to any of the preceding claims, wherein an indicator (28) is assigned to a rear side (30) of the radio system (10), in particular wherein the indicator (28) is controlled in the maintenance mode to identify a radio device (14) to be maintained.

6. The radio system (10) according to claim 5, wherein the indicator (28) is an optical indicator that is configured to indicate the maintenance mode visually, in particular wherein the indicator (28) is established by a diode (32) and/or a network port (34).

7. The radio system (10) according to any of the preceding claims, wherein the radio system (10) has an antenna (36) for establishing the radio connection in the regular operation mode.

8. A method of operating a radio system (10) with an own configuration unit (16), with the following steps:
- Providing a radio system (10) that is an air traffic control radio system (10) for air traffic control communication, wherein the radio system (10) has a regular operation mode and a maintenance mode, wherein, in the regular operation mode, a radio connection is established between a ground station and a flying object,
- Loading and applying, by the own configuration unit (16), in the regular operation mode, maintenance settings assigned to the maintenance mode in case of activation of the maintenance mode, and
- Loading and applying, by the own configuration unit (16), regular operation settings when the maintenance mode is quit.

9. The method according to claim 8, wherein the maintenance mode is activated or quit based upon operator input.

10. The method according to claim 8 or 9, wherein the operator interacts with an operator interface (20) at the front side (22) of the radio system (10) to activate the maintenance mode.

11. The method according to any of the claims 8 to 10, wherein a radio device (14) to be maintained is indicated on the rear side (30) of the radio system (10) in a visual manner.

12. The method according to any of the claims 8 to 11, wherein, in the maintenance mode, a maintenance connection is established with a maintenance device (24) and/or to an operator, in particular via voice over internet protocol techniques.

13. The method according to any of the claims 8 to 12, wherein, in the maintenance mode, radio frequency communication and/or audio communication are/is simulated and/or a test device (26) is used.

## Patentansprüche

1. Funksystem (10) mit einer eigenen Konfigurationseinheit (16), wobei das Funksystem (10) ein Flugsicherungsfunksystem (10) für eine Flugsicherungskommunikation ist, wobei das Funksystem (10) einen regulären Betriebsmodus und einen Wartungsmodus aufweist, wobei das Funksystem (10), in dem regulären Betriebsmodus, konfiguriert ist, um eine Funkverbindung zwischen einer Bodenstation und einem Flugobjekt herzustellen, wobei das Funksystem (10), in dem Wartungsmodus, konfiguriert ist, um eine Wartungsverbindung herzustellen, **dadurch gekennzeichnet, dass** das Funksystem (10) einen Speicher (18) aufweist, wobei Einstellungen, die sowohl dem regulären Betriebsmodus als auch dem Wartungsmodus zugeordnet sind, in dem Speicher (18) gespeichert sind, und wobei die eigene Konfigurationseinheit (16) konfiguriert ist, um je nach dem aktivierten Modus das Funksystem (10) mit den jeweiligen Einstellungen einzustellen, die in dem Speicher (18) gespeichert sind.

2. Funksystem (10) nach Anspruch 1, wobei die Einstellungen, die sowohl dem regulären Betriebsmodus als auch dem Wartungsmodus zugeordnet sind, vordefiniert sind, insbesondere während der Ersteinrichtung des Funksystems (10).

3. Funksystem (10) nach Anspruch 1 oder 2, wobei das Funksystem (10) konfiguriert ist, um basierend auf einer Bedienereingabe zwischen dem regulären Betriebsmodus und dem Wartungsmodus umzuschalten.

4. Funksystem (10) nach einem der vorstehenden Ansprüche, wobei das Funksystem (10) eine Bedienerschnittstelle (20) an seiner Vorderseite (22) aufweist.

5. Funksystem (10) nach einem der vorstehenden Ansprüche, wobei eine Anzeige (28) einer Rückseite (30) des Funksystems (10) zugeordnet ist, insbesondere wobei die Anzeige (28) in dem Wartungsmodus gesteuert wird, um eine zu wartende Funkvorrichtung (14) zu identifizieren.

6. Funksystem (10) nach Anspruch 5, wobei die Anzeige (28) eine optische Anzeige ist, die konfiguriert ist, um den Wartungsmodus visuell anzuzeigen, insbesondere wobei die Anzeige (28) durch eine Diode (32) und/oder einen Netzwerkanschluss (34) hergestellt ist.

7. Funksystem (10) nach einem der vorstehenden Ansprüche, wobei das Funksystem (10) eine Antenne (36) zum Herstellen der Funkverbindung in dem regulären Betriebsmodus aufweist.

8. Verfahren zum Betreiben eines Funksystems (10) mit einer eigenen Konfigurationseinheit (16), mit den folgenden Schritten:
- Bereitstellen eines Funksystems (10), das ein Flugsicherungsfunksystem (10) für die Flugsicherungskommunikation ist, wobei das Funksystem (10) einen regulären Betriebsmodus und einen Wartungsmodus aufweist, wobei, in dem regulären Betriebsmodus, eine Funkverbindung zwischen einer Bodenstation und einem Flugobjekt hergestellt wird,
- Laden und Anwenden, durch die eigene Konfigurationseinheit (16), in dem regulären Betriebsmodus, von Wartungseinstellungen, die dem Wartungsmodus zugeordnet sind, in dem Fall einer Aktivierung des Wartungsmodus, und
- Laden und Anwenden, durch die eigene Konfigurationseinheit (16), von regulären Betriebseinstellungen, wenn der Wartungsmodus beendet wird.

9. Verfahren nach Anspruch 8, wobei der Wartungsmodus basierend auf einer Bedienereingabe aktiviert oder beendet wird.

10. Verfahren nach Anspruch 8 oder 9, wobei der Bediener mit einer Bedienerschnittstelle (20) an der Vorderseite (22) des Funksystems (10) interagiert, um den Wartungsmodus zu aktivieren.

11. Verfahren nach einem der Ansprüche 8 bis 10, wobei eine zu wartende Funkvorrichtung (14) auf der Rückseite (30) des Funksystems (10) auf visuelle Weise angezeigt wird.

12. Verfahren nach einem der Ansprüche 8 bis 11, wobei, in dem Wartungsmodus, eine Wartungsverbindung zu einer Wartungsvorrichtung (24) und/oder zu einem Bediener hergestellt wird, insbesondere über Voice-over-Internet-Protocol-Techniken.

13. Verfahren nach einem der Ansprüche 8 bis 12, wobei, in dem Wartungsmodus, eine Funkfrequenzkommunikation und/oder eine Audiokommunikation simuliert wird und/oder eine Testvorrichtung (26) verwendet wird.

## Revendications

1. Système radio (10) comportant une unité de configuration propre (16), dans lequel le système radio (10) est un système radio de contrôle du trafic aérien (10) pour une communication de contrôle du trafic aérien, dans lequel le système radio (10) présente un mode de fonctionnement normal et un mode de maintenance, dans lequel, dans le mode de fonctionnement normal, le système radio (10) est configuré pour établir une connexion radio entre une station au sol et un objet volant, dans lequel, dans le mode de maintenance, le système radio (10) est configuré pour établir une connexion de maintenance,
**caractérisé en ce que** le système radio (10) présente une mémoire (18), dans lequel des réglages attribués au mode de fonctionnement normal et au mode de maintenance sont stockés dans la mémoire (18), et dans lequel l'unité de configuration propre (16) est configurée pour régler le système radio (10) avec les réglages respectifs stockés dans la mémoire (18) en fonction du mode activé.

2. Système radio (10) selon la revendication 1, dans lequel les réglages attribués au mode de fonctionnement normal et au mode de maintenance sont prédéfinis, en particulier lors de la configuration initiale du système radio (10).

3. Système radio (10) selon la revendication 1 ou 2, dans lequel le système radio (10) est configuré pour commuter entre le mode de fonctionnement normal et le mode de maintenance sur la base d'une entrée de l'opérateur.

4. Système radio (10) selon l'une quelconque des revendications précédentes, dans lequel le système radio (10) présente une interface opérateur (20) au niveau de son côté avant (22).

5. Système radio (10) selon l'une quelconque des revendications précédentes, dans lequel un indicateur (28) est attribué à un côté arrière (30) du système radio (10), en particulier dans lequel l'indicateur (28) est contrôlé dans le mode de maintenance pour identifier un dispositif radio (14) dont il faut assurer la maintenance.

6. Système radio (10) selon la revendication 5, dans lequel l'indicateur (28) est un indicateur optique configuré pour indiquer visuellement le mode de maintenance, en particulier dans lequel l'indicateur (28) est établi par une diode (32) et/ou un port réseau (34).

7. Système radio (10) selon l'une quelconque des revendications précédentes, dans lequel le système radio (10) présente une antenne (36) destinée à établir la connexion radio en mode de fonctionnement normal.

8. Procédé d'exploitation d'un système radio (10) comportant une unité de configuration propre (16), comportant les étapes suivantes consistant à :
- fournir un système radio (10) qui est un système radio de contrôle du trafic aérien (10) pour une communication de contrôle du trafic aérien, dans lequel le système radio (10) présente un mode de fonctionnement normal et un mode de maintenance, dans lequel, dans le mode de fonctionnement normal, une connexion radio est établie entre une station au sol et un objet volant,
- charger et appliquer, par l'unité de configuration propre (16), dans le mode de fonctionnement normal, des réglages de maintenance attribués au mode de maintenance en cas d'activation du mode de maintenance, et
- charger et appliquer, par l'unité de configuration propre (16), des réglages de fonctionnement normal lorsque le mode de maintenance est désactivé.

9. Procédé selon la revendication 8, dans lequel le mode de maintenance est activé ou désactivé en fonction de l'entrée de l'opérateur.

10. Procédé selon la revendication 8 ou 9, dans lequel l'opérateur interagit avec une interface opérateur (20) au niveau du côté avant (22) du système radio (10) pour activer le mode de maintenance.

11. Procédé selon l'une quelconque des revendications 8 à 10, dans lequel un dispositif radio (14) dont il faut assurer la maintenance est indiqué visuellement sur le côté arrière (30) du système radio (10).

12. Procédé selon l'une quelconque des revendications 8 à 11, dans lequel, en mode de maintenance, une connexion de maintenance est établie avec un dispositif de maintenance (24) et/ou avec un opérateur, en particulier par le biais de techniques de voix sur protocole Internet.

13. Procédé selon l'une quelconque des revendications 8 à 12, dans lequel, dans le mode de maintenance, une communication par radiofréquence et/ou une communication audio sont simulées et/ou un dispositif de test (26) est utilisé.
